Europäisches Patentamt

European Patent Office  (11) Numéro de publication: **0 154 592**

Office européen des brevets  **A1**

(12) ## DEMANDE DE BREVET EUROPEEN

(21) Numéro de dépôt: **85400443.9**

(22) Date de dépôt: **07.03.85**

(51) Int. Cl.⁴: **A 01 M 7/00**
**F 16 K 31/05**

(30) Priorité: **09.03.84 FR 8403706**

(43) Date de publication de la demande:
**11.09.85 Bulletin 85/37**

(84) Etats contractants désignés:
**BE DE FR GB IT LU NL**

(71) Demandeur: **ACM CARUELLE S.A.**
**Rue de l'Industrie B.P. 2**
**F-45550 Saint Denis de l'Hotel(FR)**

(72) Inventeur: **Rateau, André**
**5, rue de Givroux**
**F-45430 Checy(FR)**

(74) Mandataire: **Phélip, Bruno et al,**
**c/o Cabinet Harlé & Phélip 21, rue de la Rochefoucauld**
**F-75009 Paris(FR)**

(54) Dispositif de commande électrique de robinet de distributeur hydraulique.

(57) Le dispositif de commande électrique de robinet de distributeur hydraulique comprend un moteur électrique (41), réversible, dont la rotation est transmise à un écrou (49), fixe axialement et mobile en rotation, d'un système vis-écrou dont la vis est constituée par une extrémité filetée (36) d'un axe (24) de translation axiale d'un obturateur (23) entre deux positions dans une chambre (5) de distributeur (1).

Les deux positions correspondent, l'une, à la fermeture de l'alimentation, et l'autre, à l'ouverture de l'alimentation du raccord (7) à partir du conduit (2). Le moteur (41) est commandé par un inverseur bipolaire.

Application à la commande de l'alimentation d'une rampe de pulvérisateur.

1

## DISPOSITIF DE COMMANDE ELECTRIQUE DE ROBINET DE DISTRIBUTEUR HYDRAULIQUE.

La présente invention concerne un dispositif de commande électrique d'au moins un robinet de distributeur hydraulique, et elle se rapporte plus précisément à un dispositif de commande électrique d'un robinet motorisé, à deux voies et trois orifices, d'un distributeur hydraulique destiné à l'équipement d'un pulvérisateur.

On sait que des pulvérisateurs, notamment ceux qui sont utilisés pour assurer l'épandage d'engrais liquides, comportent une rampe de pulvérisation, subdivisée en sections de pulvérisation qui sont chacune alimentée, à partir d'une cuve d'alimentation générale, par l'intermédiaire d'un distributeur commandé par un robinet à deux voies et trois orifices. Les distributeurs remplissent ainsi une fonction de répartition du produit liquide provenant de la cuve d'alimentation générale vers les différentes sections de la rampe, qui peut être équipée d'un nombre de robinets compris généralement entre trois et huit.

Chaque distributeur hydraulique comprend une chambre interne en communication, respectivement, par un premier orifice avec un conduit d'alimentation du distributeur, relié à la cuve, par un second orifice avec un conduit de retour vers la cuve, et par un troisième orifice avec un raccord de liaison à la section correspondante de la rampe de pulvérisation.

Le robinet de commande correspondant comprend un clapet, dont l'obturateur est logé dans la chambre interne du distributeur, et est destiné à être déplacé dans cette chambre entre deux positions, dont l'une est une position d'ouverture du robinet, correspondant à l'alimentation de la section correspondante de la rampe, dans laquelle l'obturateur est appliqué contre un premier siège et écarté d'un second siège, de sorte qu'il coupe la communication entre le conduit de retour et le conduit d'alimentation, tout en mettant ce dernier en communication avec le raccord de

2

liaison, et dont l'autre est une position de fermeture du robinet, dans laquelle l'obturateur est appliqué contre le second siège et écarté du premier, de sorte qu'il coupe la communication entre le raccord de liaison et le conduit d'alimentation, tout en mettant ce dernier en communication avec le conduit de retour. Les déplacements de l'obturateur, entre ses deux positions extrêmes dans la chambre, sont commandés par l'actionnement d'un organe de manoeuvre du robinet, relié à l'obturateur.

Les ensembles connus de ce type, équipés notamment de distributeurs hydrauliques commercialisés par la Demanderesse sous les dénominations HYDROVAR et VOLUSTAT, ont pour inconvénient majeur que l'organe de manoeuvre de chaque robinet est un levier, actionné manuellement, afin de commander la fermeture ou l'ouverture du robinet correspondant, indépendamment des leviers de manoeuvre des autres robinets de l'ensemble, ce qui ne permet pas de commander simultanément tous les robinets, notamment afin d'obtenir une fermeture générale pratiquement instantanée de la rampe, et limite les possibilités de commande à distance des robinets.

Par la présente invention, on se propose de remédier à ces inconvénients, et l'invention a pour but de permettre une commande à distance aisée de chaque robinet, par exemple depuis la cabine d'un engin, tel qu'un tracteur, sans qu'il soit nécessaire de disposer le robinet et le distributeur correspondant dans la cabine afin que l'organe de manoeuvre du robinet soit à portée de main du conducteur de l'engin.

Un autre but de l'invention est de permettre une commande simultanée de tous les robinets d'un pulvérisateur du type présenté ci-dessus.

L'invention a enfin pour but de permettre à une commande manuelle de chaque robinet, accessible à proximité immédiate du module que ce robinet constitue avec le distributeur hydraulique correspondant, de pallier aux défaillances éventuelles de la commande à distance.

3

A cet effet, le dispositif de commande d'au moins un robinet de distributeur hydraulique, du type présenté ci-dessus, se caractérise par le fait qu'il comprend un moteur électrique réversible, constituant l'organe de manoeuvre du robinet, et destiné à entraîner en rotation un écrou, retenu en position axiale, d'un système vis-écrou, dont la vis, déplaçable en translation axiale, est constituée par une partie filetée d'un axe dont l'obturateur du clapet est solidaire, de sorte que selon le sens de rotation du moteur, et donc de l'écrou, l'axe est translaté axialement dans un sens qui déplace l'obturateur de l'une à l'autre de ses deux positions extrêmes dans la chambre du distributeur. Cette réalisation a pour avantage que le moteur électrique, et donc le distributeur correspondant, peut être commandé, à distance voulue, par des moyens simples, peu coûteux et peu encombrants qui peuvent aisément être installés à portée de main dans une cabine de tracteur, tandis que le moteur et le système vis-écrou sont montés sur le distributeur, lui-même installé à proximité immédiate de la rampe de pulvérisateur , de sorte que la longueur des canalisations hydrauliques peut être réduite au minimum. Ce dispositif assure de plus une commande souple et sans effort pour l'opérateur.

De préférence, afin de déplacer l'obturateur avec une vitesse convenable, compte-tenu de la course relativement faible de ce dernier entre ses deux positions extrêmes, tout en disposant d'un couple garantissant le passage d'une position extrême à l'autre, l'entraînement en rotation de l'écrou à partir du moteur est assuré par l'intermédiaire d'un train d'engrenages comprenant au moins un pignon en prise avec un pignon calé sur l'arbre de sortie du moteur, et un autre pignon en prise avec une denture solidaire en rotation de l'écrou, de sorte que le rapport de démultiplication puisse être convenablement ajusté, en fonction des caractéristiques du moteur et du système vis-écrou, ainsi que de la section transversale de l'obturateur et de la pression d'alimentation du distributeur.

4

Avantageusement, une poignée de commande manuelle est solidaire en rotation de l'écrou et retenue axialement sur ce dernier, de sorte qu'une rotation de la poignée entraîne un déplacement axial de l'axe et de l'obturateur, afin qu'il soit toujours possible pour l'opérateur de commander manuellement la fermeture ou l'ouverture du robinet, en manoeuvrant la poignée, en cas de défaillance de la commande électrique.

Dans un mode de réalisation de structure simple, l'obturateur est engagé et retenu axialement sur une première extrémité de l'axe qui est séparée de l'autre extrémité, filetée et engagée dans le taraudage correspondant de l'écrou, par une partie centrale portant au moins un joint d'étanchéité sur une portion d'axe qui pénètre dans le distributeur, et dont au moins une autre portion d'axe, qui porte au moins un élément en saillie radiale est guidé axialement dans une portée présentant, pour chaque élément en saillie radiale, une rainure de forme correspondante à celle de cet élément et recevant ce dernier, afin d'immobiliser l'axe en rotation par rapport à un boitier de fixation au distributeur et dans lequel est formée la portée et logé le moteur.

Dans ce cas, il est avantageux, sur le plan du montage du dispositif notamment, que le moteur soit supporté par une embase de fermeture du boitier, du côté de ce dernier qui est opposé au distributeur, et de sorte que l'arbre de sortie du moteur, dont la rotation est transmise à l'écrou, est en saillie à l'extérieur du boitier, l'embase présentant également une portée de guidage de l'axe, traversée par une portion adjacente à l'extrémité filetée de cet axe, et, le cas échéant, au moins un palier de support du train d'engrenages.

Afin de former un ensemble compact et bien protégé, il est avantageux que l'embase soit bridée entre le boitier et un capot de protection, recouvrant l'arbre de sortie du moteur, le train d'engrenages, le cas échéant, et la denture solidaire en rotation de l'écrou, et qui est celle d'un pignon calé sur l'écrou.

Afin de faciliter le montage de la poignée de commande manuelle, l'écrou est de préférence constitué par un manchon, traversant un palier ménagé dans le capot, et dont la partie d'extrémité qui s'étend du capot vers l'embase présente un passage central taraudé, tandis que l'autre partie d'extrémité du manchon, en saillie à l'extérieur du capot, est engagée dans la poignée et goupillée sur cette dernière.

Afin d'assurer une bonne étanchéité par la coopération de l'obturateur avec chacun des deux sièges contre lesquels il prend alternativement appui, dans ses deux positions extrêmes, l'obturateur est avantageusement réalisé en un matériau élastiquement déformable et se présente sensiblement sous la forme d'un cylindre dont les parties d'extrémité axiales de la surface latérale sont troncôniques.

Dans un mode de réalisation avantageux sur le plan du montage comme de l'utilisation de la commande électrique du moteur, ce dernier est un moteur à courant continu commandé par un inverseur bipolaire à trois positions, dont l'une est une position stable, de repos, dans laquelle l'inverseur est élastiquement rappelé, et dont les deux autres sont des positions instables, de travail, dans chacune desquelles l'inverseur doit être maintenu manuellement, afin de commander la rotation du moteur dans l'un ou l'autre sens, et donc l'ouverture ou la fermeture du robinet.

Dans un mode de réalisation particulièrement destiné à la commande de plusieurs robinets, notamment pour l'équipement des distributeurs hydrauliques des rampes de pulvérisateurs du type présenté ci-dessus, le dispositif de commande comprend un moteur commandé individuellement par un inverseur correspondant pour chaque robinet, et tous les inverseurs sont montés sur un boitier de commande commun et actionnés simultanément, à la fermeture et/ou à l'ouverture des robinets, par la manoeuvre manuelle d'un basculeur

6

mécanique, monté pivotant sur le boitier de commande.

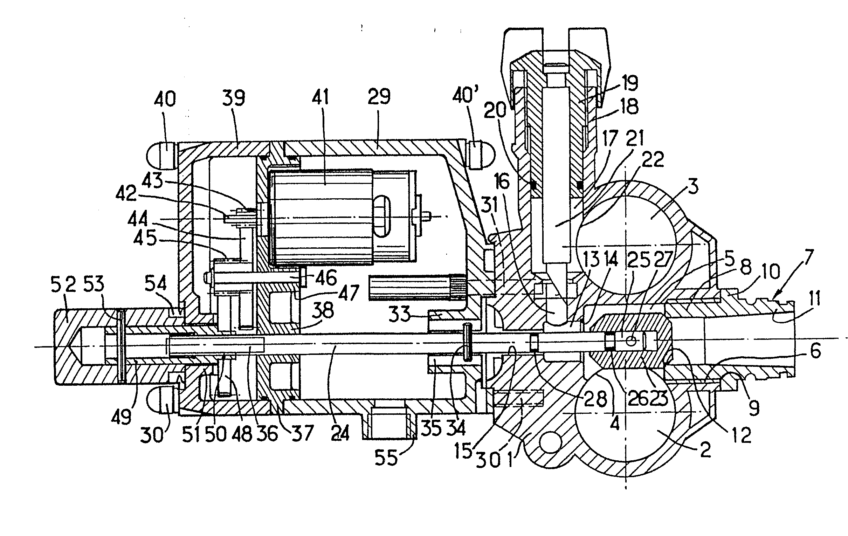

La présente invention sera mieux comprise à la lecture de la description qui suit, d'un exemple de réalisation, donné à titre non limitatif, et en se référant à la figure unique annexée qui représente en coupe axiale, un dispositif de commande d'un robinet de distributeur hydraulique selon l'invention.

Dans le dispositif représenté sur la figure unique annexée, le corps 1 du distributeur hydraulique, réalisé en polyamide, est percé d'un conduit 2 d'alimentation du distributeur, qui est relié à une source d'alimentation en liquide (non représentée) telle qu'un réservoir ou une cuve d'un pulvérisateur d'engrais liquide, ainsi que d'un conduit 3 de retour du liquide vers la cuve ou le réservoir, les deux conduits 2 et 3 ayant une section transversale circulaire sensiblement égale et s'étendant selon des axes parallèles. Le conduit 2 débouche , par un orifice 4, dans une chambre 5 qui est délimitée dans le corps 1 par un alésage d'axe perpendiculaire au plan défini par les axes des conduits 2 et 3, et dont la paroi latérale adjacente à l'entrée dans le corps 1 présente un taraudage 6 dans lequel est vissé un embout extérieurement fileté 8 d'un raccord tubulaire 7, également en polyamide, avec interposition d'un joint d'étanchéité 9 entre un chanfrein d'entrée dans la chambre 5 et l'angle délimité par l'embout 8 et un épaulement radial externe 10 séparant, sur le raccord 7, l'embout 8 d'un embout opposé 11, sur lequel est serrée (par exemple par des colliers) l'extrémité d'une canalisation hydraulique d'alimentation d'une section d'une rampe de pulvérisateur .

A son extrémité disposée dans la chambre 5, le passage central du raccord 8 s'ouvre dans la chambre 5 par un chanfrein tronconique 12, et, du côté opposé au raccord 7 , la chambre 5 se prolonge par un alésage 13, de plus petit diamètre, auquel elle se raccorde par un chanfrein tronconique 14.

L'alésage 13 communique lui-même avec l'extérieur du corps 1, d'une part, par un perçage coaxial 15, et d'autre part, par un perçage radial 16 qui débouche dans le canal central 17 d'une cheminée 18 fermée de manière étanche par un bouchon 19, dont l'extrémité supérieure filetée de la partie engagée dans le canal 17 est vissée dans un taraudage de l'extrémité supérieure de la cheminée 18. Le bouchon 19 est entouré d'un joint d'étanchéité 20 et est muni d'un plongeur interne 21, à extrémité inférieure biseautée engagée dans le perçage 19. De plus, le passage 17 débouche dans le conduit 3 par un orifice 22. Un obturateur 23, en polyéthylène et élastiquement déformable, ayant la forme d'un tronc de cylindre de section circulaire, dont les extrémités axiales de la surface latérale sont tronçoniques, est engagé par un passage central sur une extrémité 25 d'un axe cylindrique 24, en acier inoxydable. L'obturateur 23 est immobilisé axialement par une goupille 27 sur l'extrémité 25 de l'axe portant un joint d'étanchéité 26 en matière plastique commercialisé sous le nom de marque " Viton ". L'axe 24 traverse le perçage coaxial 15 par une portion équipée d'un second joint d'étanchéité 28 en " Viton ", afin d'empêcher toute fuite de liquide vers l'extérieur du corps 1, le long de l'axe 24, qui pénètre dans un boitier 29 en polyamide fixé au corps 1 par un goujon fileté 30 et par deux vis telles que 31.Dans son fond, par lequel il est appliqué contre le corps 1, le boitier 29 présente une portée 33 de guidage de l'axe 24. Cette portée 33 est traversée par une portion d'axe 24 portant une goupille radiale 34, en saillie de part et d'autre de l'axe 24, et reçue par ses deux extrémités dans deux rainures 35 ménagées axialement dans la portée 33, et de forme correspondante, afin de bloquer l'axe 24 en rotation par rapport au corps 1 et au boitier 29. L'axe 24 est également guidé axialement par une portion lisse, adjacente à son autre extrémité 36 qui est filetée, et engagée dans une portée 38 d'une embase 37, également en polyamide. L'embase 37 ferme le boitier 29, du côté de ce dernier opposé à son fond, en étant bridée, par un collet périphérique, entre le boitier 29 et un capot 39, également en polyamide, et fixé au

8

boitier 29 par deux goujons filetés, qui traversent le collet périphérique de l'embase 37, et dont l'un 30 assure simultanément la fixation du boitier 29 sur le corps 1, tandis que l'autre, 40, coopère avec un écrou 40'. Par sa partie principale, l'embase 37 est emboitée d'un côté dans le boitier 29 et de l'autre dans le capot 39, par des parties cylindriques de sa surface latérale qui sont équipées de joint d'étanchéité. L'embase 37 porte un moteur 41 électrique, réversible, à courant continu, alimenté sous une tension de 12 V, et qui est logé dans le boitier 29 en étant ainsi monté sur l'embase 37 que son arbre de sortie 42 soit saillant dans le volume délimité par l'embase 37 et le capot 39. Un petit pignon 43 est calé sur l'arbre 42 et en prise avec un grand pignon 44 en acier d'un train d'engrenages qui comprend un autre pignon 45, en bronze, dont le pignon 44 est solidaire en rotation sur un axe commun 46 monté et retenu axialement dans un palier 47 de l'embase 37. Le pignon 45 est lui-même en prise avec un pignon mené 48 en acier, monté solidaire en rotation sur l'extrémité 50, en saillie entre le capot 39 et l'embase 37, d'un manchon 49 en bronze auto-lubrifiant, qui traverse un palier 51 du capot 39, et dont la partie en saillie à l'extérieur du capot 39 est engagée dans une poignée 52 en aluminium, et est retenue axialement dans cette dernière et solidaire en rotation de cette dernière par une goupille 53. Un joint d'étanchéité à lèvre 54, en caoutchouc au nitrile est monté entre un épaulement de la poignée 52, du côté du capot 39, et un lamage dans le capot 39. Enfin, l'extrémité filetée 36 de l'axe 24 est engagée et vissée dans un taraudage présenté par la partie du passage central du manchon 49 qui s'étend dans l'extrémité 50, de plus petit diamètre externe, du manchon 50, et dans la portion adjacente de ce dernier qui est logée dans le palier 51.

Dans ce montage, le manchon 49 à taraudage interne et l'extrémité filetée 36 de l'axe 24 constituent respectivement l'écrou et la vis d'un système vis-écrou à écrou

9

retenu en position axiale et mobile en rotation, et à vis déplaçable axialement mais bloquée en rotation, grâce à la coopération de la goupille 34 de l'axe 24 et des rainures 35 de la portée 33. Ainsi, la rotation, dans l'un ou l'autre sens, de l'arbre 42 du moteur 41, alimenté par des fils électriques qui pénètrent dans le boitier 29 par le raccord 55 de ce dernier, est transmise, dans un sens de rotation correspondant , et par l'intermédiaire du pignon 43, du train d'engrenages 44, 45 et du pignon 48, au manchon 49. Cette rotation du manchon 49 entraîne la translation axiale, dans un sens correspondant, de l'axe 24, qui déplace ainsi l'obturateur 23 dans la chambre 5 du corps 1 du distributeur, entre deux positions extrêmes, dont l'une, représentée sur la figure unique, est une position de fermeture de l'alimentation de la section correspondante de la rampe de pulvérisateur . Dans cette position, l'obturateur 23 est appliqué par sa partie de surface latérale troncônique de l'extrémité de droite sur la figure contre le siège formé par le chanfrein troncônique 12 du raccord 7, et s'adapte parfaitement à la conformation de ce siège, par déformation élastique, de sorte que toute communication entre le conduit d'alimentation 2 et le raccord 7 est interrompue, le liquide s'écoulant du conduit 2 vers le conduit de retour 3 par la chambre 5, l'alésage 13, le perçage 16, le canal 17 et l'orifice 22. L'autre position est une position d'ouverture de l'alimentation de la section correspondante de la rampe de pulvérisateurs, dans laquelle l'obturateur 23 est amené, à partir de la position de fermeture représentée sur la figure annexée, par une rotation de l'arbre 42 du moteur 41 dans le sens qui entraîne le déplacement axial de l'axe 24 et de l'obturateur 23 vers la gauche sur la figure, jusqu'à ce que l'obturateur 23 soit appliqué par la partie de surface latérale troncônique de son extrémité de gauche sur la figure, contre le siège formé par le chanfrein troncônique 14, au fond de la chambre 5. Par déformation élastique, l'obturateur 23 s'adapte à la conformation du siège 14 et assure une

10

fermeture étanche de la communication entre le conduit d'alimentation 2 et le conduit de retour 3. Par contre, le liquide peut librement passer du conduit 2 dans le raccord 7, vers la rampe du fait que l'obturateur 23 est écarté du siège 12. En cas de défaillance du moteur ou de sa commande électrique, l'opérateur peut déplacer l'obturateur 23 de l'une à l'autre de ses deux positions extrêmes dans la chambre 5, en tournant manuellement la poignée 52, ce qui entraîne la rotation du manchon 49, et donc la translation axiale de l'axe 24.

Le moteur 41 est commandé par un inverseur bipolaire à trois positions, d'un type bien connu, dont une position centrale est une position stable, de repos, dans laquelle l'inverseur est élastiquement rappelé à partir de l'une quelconque des deux autres positions, qui sont des positions instables, de travail, dont chacune correspond à une alimentation du moteur 41 faisant tourner l'arbre 42 de ce dernier dans l'un des deux sens possibles de rotation. Afin d'obtenir la course complète de l'obturateur 23 d'une position extrême à l'autre, l'opérateur bascule l'inverseur dans la position de travail correspondante et le maintien dans cette position pendant deux à trois secondes, l'inverseur est donc actionné dans un sens ou dans l'autre, selon que l'opérateur désire commander l'ouverture ou la fermeture, et l'inverseur est maintenu dans cette position jusqu'à ce que l'alimentation de la section correspondante de la rampe soit ouverte ou fermée. Lorsque l'obturateur 23 parvient en butée contre l'un ou l'autre des deux sièges 12 et 14, le moteur 41 se bloque en rotation, ce qui n'est pas préjudiciable, car le moteur à courant continu est d'un type spécialement conçu pour résister à des court-circuits prolongés et répétés. Après le blocage du moteur en fin de course, il suffit de relacher l'inverseur, qui revient de lui-même en position de repos.

Dans le but de faciliter l'utilisation d'un pulvérisateur, dont les sections de la rampe sont alimentées

11

chacune par un dispositif tel que représenté sur la figure unique et décrit ci-dessus, chaque moteur 41 associé à l'une des sections de rampe est individuellement commandé par un inverseur bipolaire, et tous les inverseurs sont montés dans un boitier électrique de commande commun, à porté de main de l'opérateur, dans la cabine de l'engin. Ce boitier de commande commun comporte non seulement tous les inverseurs, dont les leviers de manoeuvre sont alignés, en saillie sur une face du boitier de commande, mais également un coupe-circuit, un fusible et un témoin lumineux de fonctionnement. Afin de permettre une commande simultanée, à l'ouverture comme à la fermeture, de toutes les sections de rampe, un basculeur mécanique est monté pivotant sur le boitier de commande électrique, de manière à actionner simultanément tous les leviers de manoeuvre des inverseurs, lorsque le basculeur est pivoté dans un sens ou dans l'autre. Ce basculeur est par exemple constitué par une pièce en forme de U, montée pivotante par ses ailes, autour d'un axe commun, sur deux côtés opposés du boitier de commande, la base du U portant, vers l'extérieur, une poignée de commande générale, manoeuvrée par l'opérateur, et les leviers de manoeuvre des inverseurs sont engagés chacun dans une ouverture de la base du U, afin d'être basculés lorsque le basculeur est manoeuvré.

De plus, il est clair que le dispositif décrit ci-dessus peut tout aussi bien être monté sur un distributeur à débit proportionnel à l'avancement de l'engin, qui tracte ou porte le pulvérisateur, que sur un distributeur à débit proportionnel au régime moteur de cet engin.

12

REVENDICATIONS

1. Dispositif de commande d'au moins un robinet de distributeur hydraulique, le distributeur (1) étant du type utilisé afin d'alimenter, notamment, au moins une section de rampe de pulvérisateur, et comprenant une chambre (5) en communication, par un premier orifice (4) avec un conduit d'alimentation (2) du distributeur, relié à un réservoir d'alimentation, par un second orifice (13) avec un conduit de retour (3) vers le réservoir, et par un troisième orifice (8) avec un raccord de liaison (7) à la section correspondante de la rampe du pulvérisateur, et le robinet·comprenant un clapet dont l'obturateur (23) est logé dans la chambre (5) du distributeur (1) et est destiné à être déplacé entre deux positions, dont l'une est une position d'ouverture du robinet, correspondant à l'alimentation de la section correspondante de la rampe, dans laquelle l'obturateur (23) est appliquée contre un premier siège (14) et écarté d'un second siège (12), de sorte qu'il coupe la communication entre le conduit de retour (3) et le conduit d'alimentation (2), tout en mettant ce dernier en communication avec le raccord de liaison (7), et dont l'autre est une position de fermeture du robinet, dans laquelle l'obturateur (23) est appliqué contre le second siège (12) et écarté du premier (14), de sorte qu'il coupe la communication entre le raccord de liaison (7) et le conduit d'alimentation (2), tout en mettant ce dernier en communication avec le conduit de retour (3), les déplacements de l'obturateur (23) entre les deux positions étant commandés par l'actionnement d'un organe de manoeuvre relié à l'obturateur (23), caractérisé en ce qu'il comprend un moteur électrique réversible (41), constituant l'organe de manoeuvre du robinet, et destiné à entraîner en rotation un écrou (49), fixe en position axiale, d'un système vis-écrou dont la vis, déplaçable en translation axiale, est constituée par une partie filetée (36) d'un axe (24) dont l'obturateur (23) du clapet est solidaire, de sorte que selon le sens de rotation du moteur (41), et donc de l'écrou

13

(49), l'axe (24) est translaté axialement dans un sens qui déplace l'obturateur (23) de l'une à l'autre de ses deux positions dans la chambre (5) du distributeur (1).

2. Dispositif de commande selon la revendication 1, caractérisé en ce que l'entraînement en rotation de l'écrou (49) à partir du moteur (41) est assuré par l'intermédiaire d'un train d'engrenages comprenant au moins un pignon (44) en prise avec un pignon (43) calé sur l'arbre de sortie (42) du moteur (41), et un autre pignon (45) en prise avec une denture (48) solidaire en rotation de l'écrou (49).

3. Dispositif de commande selon l'une des revendications 1 et 2, caractérisé en ce qu'une poignée (52) de commande manuelle est solidaire en rotation de l'écrou (49) et retenue axialement sur ce dernier, de sorte qu'une rotation de la poignée (52) entraîne un déplacement axial de l'axe (24) et de l'obturateur (23).

4. Dispositif de commande selon l'une des revendications 1 à 3, caractérisé en ce que l'obturateur (23) est engagé et retenu axialement sur une première extrémité (25) de l'axe (24) qui est séparée de l'autre extrémité (36), filetée et engagée dans le taraudage correspondant de l'écrou (49), par une partie centrale, portant au moins un joint d'étanchéité (28) sur une portion d'axe (24) qui pénètre dans le distributeur (1), et dont au moins une autre portion d'axe (24), qui porte au moins un élément (34) en saillie radiale, est guidée axialement dans une portée (33) présentant, pour chaque élément (34) en saillie radiale, une rainure (35) de forme correspondante à celle de cet élément (34) et recevant ce dernier, afin d'immobiliser l'axe (24) en rotation par rapport à un boitier (29) de fixation au distributeur (1) et dans lequel est formée la portée (33) et logé le moteur (41).

5. Dispositif de commande selon la revendication 4, caractérisé en ce que le moteur (41) est supporté par une embase (37) de fermeture du boitier, du côté de ce dernier qui est opposé au distributeur (1), et de sorte que l'arbre

14

de sortie (42) du moteur (41), dont la rotation est transmise à l'écrou (49), est en saillie à l'extérieur du boitier (29), l'embase (37) présentant également une portée de guidage (38) de l'axe (24), traversée par une portion adjacente à l'extrémité filetée (36) de cet axe (24), et, le cas échéant, au moins un palier (47) de support du train d'engrenages (44, 45, 46).

6. Dispositif de commande selon la revendication 5 caractérisé en ce que l'embase (37) est bridée entre le boitier (29) et un capot de protection (39), recouvrant l'arbre de sortie (42) du moteur (41), le train d'engrenages (44, 45, 46), le cas échéant, et la denture (48) solidaire en rotation de l'écrou (49), et qui est celle d'un pignon (48) calé sur l'écrou (49).

7. Dispositif de commande selon la revendication 6, telle que rattachée à la revendication 3, caractérisé en ce que l'écrou est constitué par un manchon (49) traversant un palier (51) ménagé dans le capot (39), et dont la partie d'extrémité qui s'étend du capot (39) vers l'embase (37) présente un passage central taraudé, tandis que l'autre partie d'extrémité du manchon (49), en saillie à l'extérieur du capot (39), est engagée dans la poignée (52) et goupillée (53) sur cette dernière.

8. Dispositif de commande selon l'une des revendications 1 à 7, caractérisé en ce que l'obturateur (23) est réalisé en un matériau élastiquement déformable et se présente sensiblement sous la forme d'un cylindre dont les parties d'extrémité axiales de la surface latérale sont tronccôniques, afin d'assurer une bonne étanchéité par coopération avec chacun des deux sièges (12, 14) contre lesquels il prend alternativement appui dans ses positions extrêmes.

9. Dispositif de commande selon l'une des revendications 1 à 8, caractérisé en ce que le moteur (41) est un moteur à courant continu, commandé par un inverseur bipolaire à trois positions, dont l'une est une position stable, de repos, dans laquelle l'inverseur est élastiquement

15

rappelé, et dont les deux autres sont des positions instables, de travail, dans chacune desquelles l'inverseur doit être maintenu, afin de commander la rotation du moteur (41) dans l'un ou l'autre sens, et donc l'ouverture ou la fermeture du robinet.

10. Dispositif de commande selon la revendication 9, destiné à la commande de plusieurs robinets, caractérisé en ce qu'il comprend un moteur (41) commandé individuellement par un inverseur correspondant pour chaque robinet, tous les inverseurs étant montés sur un boitier de commande commun et actionnés simultanément, à la fermeture et/ou à l'ouverture des robinets, par la manoeuvre manuelle d'un basculeur mécanique monté pivotant sur le boitier de commande.

Office européen
des brevets

# RAPPORT DE RECHERCHE EUROPEENNE

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int. Cl.4) |
|---|---|---|---|
| Y | DE-A-3 121 619 (SCHMIERER) <br> * Page 8, ligne 18 - page 10, ligne 24 * | 1 | A 01 M 7/00 <br> F 16 K 31/05 |
| Y | FR-A-2 169 544 (BERTHOUD) <br> * Page 2, ligne 17 - page 3, ligne 17 * | 1 | |
| Y | NL-C- 52 942 (SAIA) <br> * En entier * | 1 | |
| A | | 2,4 | |
| A | FR-A- 746 415 (SCHAEFFER) <br> * En entier * | 3 | |
| A | US-A-3 707 305 (DE KINKELDER) | | |

DOMAINES TECHNIQUES
RECHERCHES (Int. Cl.4)

A 01 M
F 16 K

Le présent rapport de recherche a été établi pour toutes les revendications

| Lieu de la recherche <br> LA HAYE | Date d'achèvement de la recherche <br> 08-05-1985 | Examinateur <br> VERELST P.E.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82